# EUROPÄISCHE PATENTANMELDUNG

(11) **EP 0 830 987 A2**
(43) Veröffentlichungstag der Anmeldung: **25.03.1998**
(21) Anmeldenummer: 97114912.5
(22) Anmeldetag: 28.08.1997
(51) Int. Cl.: B60R 9/058

(54) **Lösbare Abdeckung zum Verschliessen der in einem Bauteil angeordneten Vertiefung und Verwendung der Abdeckung zum Verschliessen einer im Dachbereich eines Kraftfahrzeuges angeordneten Vertiefung**

(30) Priorität: 16.09.1996 DE 19637654
(71) Anmelder: YMOS AKTIENGESELLSCHAFT Industrieprodukte, 63179 Obertshausen (DE); MERCEDES-BENZ AG, 70327 Stuttgart (DE)
(72) Erfinder: Hock, Michael, 63762 Grossostheim (DE); Marutschke, Stefan, 63110 Rodgau (DE); Pärisch, Jochen, Dipl.-Ing., 71083 Herrenberg (DE)
(74) Vertreter: Podszus, Burghart, Dipl.-Phys., Dipl.-Wirtsch.-Ing.

(57) **Zusammenfassung**

Die Erfindung betrifft eine Abdeckung zum Verschließen der in einem Bauteil (3) angeordneten Vertiefung (2).

Um zu erreichen, daß die Abdeckung (1) einfach und sicher auf einer entsprechenden Vertiefung (2) befestigt und von dieser wieder entfernt werden kann, schlägt die Erfindung vor, die Abdeckung (1) mindestens auf einer ersten Seite mit einem klipsartigen Verriegelungselement (9) zu versehen, welches eine Rastnut (12) enthält, in die eine Verriegelungszunge (13) eingreift, die an dem mit der Vertiefung (2) versehenen Bauteil angeordnet ist.

Zum Lösen der Klipsverbindung ist das Verriegelungselement (9) mit einer zungenförmigen Verlängerung (14) versehen, die den Abdeckspalt (15) zwischen Abdeckung (1) und Bauteil (3) mindestens teilweise überbrückt und, von oben gesehen, einen bogen- oder keilförmigen Randverlauf besitzt. Wird eine Scheckkarte oder ein ähnlicher, relativ dünner Gegenstand in den Abdeckspalt (15) eingeführt und seitlich in Spaltrichtung verschoben, so gleitet dieser Gegenstand an dem vorderen Rand der Verlängerung (14) entlang und drückt die Verlängerung (14) von dem Bauteil (3) -und damit die Rastnut (12) von der ersten Verriegelungszunge (13)- weg, so daß die Abdeckung (1) entriegelt ist und herausgenommen werden kann.

## Beschreibung

Die Erfindung betrifft eine lösbare Abdeckung zum Verschliessen der in einem Bauteil angeordneten Vertiefung. Die Erfindung bezieht sich ferner auf eine Verwendung einer derartigen Abdeckung zum Verschließen einer im Dachbereich eines Kraftfahrzeuges angeordneten Vertiefung, in welche die fahrzeugseitigen Bereiche entsprechender Dachgepäckträger einsetzbar sind.

Aus der DE 31 53 106 C2 ist eine Blendleiste zur Abdeckung eines rinnenförmigen Schweißkanals im Fahrzeugdach eines Personenkraftwagens bekannt, welche Vertiefungen für die Füße eines an einer Halteschiene zu befestigenden Dachgepäckträgers aufweist. Diese Vertiefungen sind durch in Längsnuten der Blendleisten geführte Abdeckungen abgedeckt, wenn kein Dachgepäckträger montiert ist. Dabei verbleibt die jeweilige Abdeckung stets in der entsprechenden mit den Vertiefungen versehenen Blendleiste und wird zum Öffnen und Schließen der Vertiefungen seitlich verschoben.

Nachteilig ist bei derartigen Abdeckungen unter anderem, daß zusätzliche Längsnuten für das Verschieben der Abdeckung erforderlich sind.

Der Erfindung liegt die Aufgabe zugrunde, eine Abdeckung anzugeben, die einfach und sicher auf einer entsprechenden Vertiefung befestigt und von dieser wieder entfernt werden kann, ohne daß für einen unbefugten Dritten sofort entnehmbar ist, auf welche Weise er die Abdeckung entfernen kann. Außerdem sollen zur Entfernung der Abdeckung keinerlei Spezialwerkzeuge erforderlich sein.

Ferner soll eine bevorzugte Verwendung einer derartigen Abdeckung offenbart werden.

Hinsichtlich der Abdeckung wird die Aufgabe erfindungsgemäß durch die Merkmale des Anspruchs 1 und hinsichtlich der Verwendung durch die Merkmale des Anspruchs 10 gelöst. Weitere, besonders vorteilhafte Ausgestaltungen der Erfindung offenbaren die Unteransprüche.

Die Erfindung beruht im wesentlichen auf dem Gedanken, die Abdeckung mindestens auf einer ersten Seite mit einem klipsartigen Verriegelungselement zu versehen, welches eine Rastnut enthält, in die eine Verriegelungszunge eingreift, die an dem mit der Vertiefung versehenen Bauteil angeordnet ist.

Zum Lösen der Klipsverbindung ist das Verriegelungselement mit einer zungenförmigen Verlängerung versehen, die den Abdeckspalt zwischen Abdeckelement und Bauteil mindestens teilweise überbrückt und, von oben gesehen, einen bogen- oder keilförmigen oder ähnlichen vorderen Randverlauf besitzt. Wird eine Scheckkarte, ein Einkaufchips, ein Geldstück oder ein ähnlicher, relativ dünner Gegenstand in den Abdeckspalt eingeführt und seitlich in Spaltrichtung verschoben, so gleitet dieser Gegenstand an dem vorderen Rand der zungenförmigen Verlängerung entlang und drückt die Verlängerung von dem Bauteil -und damit die Rastnut von der ersten Verriegelungszunge- weg, so daß die Abdeckung entriegelt ist und herausgenommen werden kann bzw. mittels eines entsprechend vorgespannten Federelementes herausgestoßen wird.

Bei einer ersten Ausführungsform der Erfindung ist zur Befestigung der Abdeckung an dem die Vertiefung enthaltenden Bauteil auf der der ersten Seite der Abdeckung gegenüberliegenden zweiten Seite ein hakenförmiges Verbindungsteil angeordnet, welches unter eine zweite Verriegelungszunge des Bauteiles greift.

Bei einer weiteren Ausführungsform der Erfindung hat es sich als vorteilhaft erwiesen, auch auf der zweiten Seite der Abdeckung ein zweites federndes Verriegelungselement als Verschlußelement vorzusehen.

Damit die Abdeckung bei der Entriegelung automatisch nach oben gedrückt wird, hat es sich ferner als zweckmäßig erwiesen, daß ein als Blattfeder ausgebildeter Bereich des Verriegelungselementes bei seiner Befestigung an dem Bauteil gegen den Boden der Vertiefung gedrückt und dadurch vorgespannt wird.

Bei einer weiteren vorteilhaften Ausführungsform ist zusätzlich zu dem federnden Verriegelungselement mindestens ein weiteres Federelement vorgesehen, welches das Herausdrücken der Abdeckung bei der Entriegelung übernimmt oder unterstützt.

Als Material für die Abdeckung hat sich insbesondere Kunststoff als zweckmäßig erwiesen, da derartige Teile sowohl kostengünstig herstellbar als auch leicht und stabil sind. Außerdem führt die Benutzung derartiger Abdeckungen -anders als entsprechende Teile aus Metall- nicht zu Kratzern an den mit den Vertiefungen versehenen Bauteilen.

Als besonders vorteilhaft hat sich in der Praxis die Verwendung der erfindungsgemäßen Abdeckungen zum Verschließen von Vertiefungen im Dachbereich von Kraftfahrzeugen erwiesen, in welche die fahrzeugseitigen Enden auswechselbarer Dachgepäckträger einsetzbar sind.

Weitere Einzelheiten und Vorteile der Erfindung ergeben sich aus den folgenden anhand von Figuren erläuterten Ausführungsbeispielen. Es zeigen:
- Fig.1: einen Längsschnitt durch ein Ausführungsbeispiel einer eine Vertiefung eines Bauteiles verschließenden Abdeckung;
- Fig.2: eine vergrößerte Ansicht des in Fig.1 mit II gekennzeichneten Bereiches bei Einführung einer Scheckkarte in den in Fig.1 mit 15 bezeichneten Spalt;
- Fig.3: eine Draufsicht auf den in Fig.2 dargestellten Bereich vor Einführung der Scheckkarte in den Spalt 15;
- Fig.4: eine Draufsicht der in Fig.1 dargestellten Abdeckung und
- Fig.5: einen Längsschnitt entlang der in Fig.4 mit V-V bezeichneten Schnittlinie.

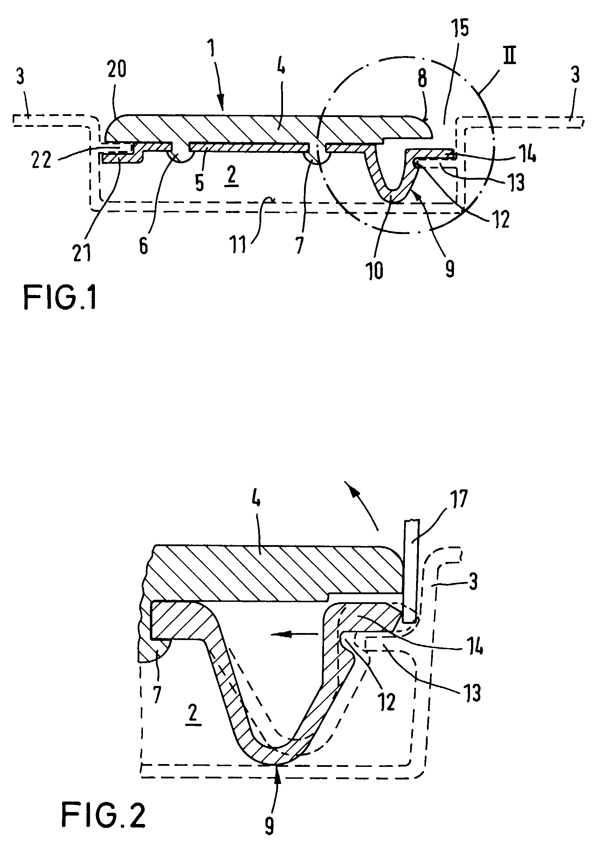

In Fig.1 ist mit 1 eine aus Kunststoff bestehende Abdeckung bezeichnet, die eine Vertiefung 2 eines gestrichelt dargestellten Bauteiles 3 (z.B. Dachbereich eines Kraftfahrzeuges) verschließt. Die Abdeckung 1 setzt sich aus einem Abdeckelement 4 und einer unterhalb des Abdeckelementes befestigten Grundplatte 5 zusammen, welche z.B. über Kunststoffnieten/-zapfen 6, 7 an dem Abdeckelement 4 durch Ultraschallschweissung, Kleben o.dgl. befestigt ist.

Zur Befestigung der Abdeckung 1 an dem Bauteil 3 ist im Bereich des mit 8 bezeichneten Seitenrandes des Abdeckelementes 4 ein Teil der Grundplatte 5 als Verriegelungselement 9 ausgebildet. Das Verriegelungselement 9 besitzt in einem Teilbereich 10 die Form einer gebogenen Blattfeder mit einer zum Boden 11 der Vertiefung 2 hin gerichteten Wölbung. Auf seiner dem ersten Seitenrand 8 des Abdeckelementes 4 zugewandten Seite ist das Verriegelungselement 9 mit einer Rastnut 12 versehen, in die eine an dem Bauteil 3 randseitig angeordnete erste Verriegelungszunge 13 klipsartig eingreift (vgl. auch Fig.2).

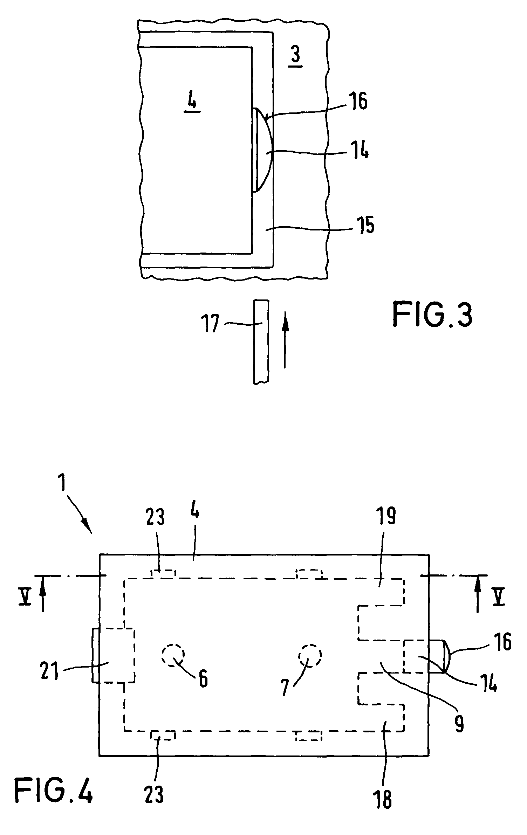

Zum Lösen dieser Klipsverbindung ist das Verriegelungselement 9 mit einer zungenförmigen Verlängerung 14 versehen, die den Abdeckspalt 15 (Fig.1) zwischen Abdeckelement 4 und Bauteil 3 mindestens teilweise überbrückt und, von oben gesehen, einen bogenförmig verlaufenden vorderen Rand 16 besitzt (Fig.3).

Wird in den Abdeckspalt 15 ein üblicherweise vorhandener, relativ schmaler Gegenstand 17, wie eine Scheckkarte oder ein Einkaufchips, eingeführt (Fig.3) und seitlich in Spaltrichtung verschoben, so gleitet dieser Gegenstand aufgrund der Formgebung des vorderen Randes 16 der Zungenförmigen Verlängerung 14 an diesem entlang und drückt die Verlängerung 14 von dem Bauteil 3 -und damit die Rastnut 12 von der ersten Verriegelungszunge 13- weg (Fig.2), so daß die Abdeckung 1 entriegelt wird.

Zusätzlich zu dem federnden Verriegelungselement 9 sind beidseitig des Verriegelungselementes zwei weitere Federelemente 18, 19 vorgesehen (Fig.4), welche eine dem Teilbereich 10 des Verriegelungselementes 9 entsprechende Form aufweisen und sich ebenfalls an der Verriegelungszunge 13 abstützen und somit das Herausdrücken der Abdeckung bei der Entriegelung der Abdeckung 1 bewirken.

Zur Befestigung der Abdeckung 1 auf der dem ersten Seitenrand 8 des Abdeckelementes gegenüberliegenden zweiten Seitenrand 20 an dem Bauteil 3 ist ein hakenförmiges Verbindungsteil 21 an der Abdeckung 1 vorgesehen, welches unter eine zweite Verriegelungszunge 22 des Bauteiles 3 greift und um welches die Abdeckung 1 schwenkbar ist.

Das Befestigen der Abdeckung 1 auf der Vertiefung 2 wird wie folgt vorgenommen: Zunächst wird die Abdeckung 1 mit dem hakenförmigen Verbindungsteil 21 unter die zweite Verriegelungszunge 22 geschoben. Anschließend wird dann die Abdeckung 1 so lange um diese Verbindung nach unten geschwenkt, bis die erste Verriegelungszunge 13 in die Rastnut 12 des Verriegelungselementes 9 einrastet. Dabei werden die Federelemente 18 und 19 gegen die Verriegelungszunge 13 gedrückt und vorgespannt.

Soll die Abdeckung 1 anschließend wieder gelöst werden, so wird z.B. der Rand einer Scheckkarte 17 seitlich von der Verlängerung 14 in den Abdeckspalt 15 eingeführt und an der Verlängerung 14 vorbeigezogen (Fig.3). Durch die Formgebung des Randes 16 der Verlängerung wird diese zurückgedrückt und die Rastnut 12 gibt die erste Verriegelungszunge frei (Fig.2). Die vorgespannten Federelemente 18 und 19 drücken dann die Abdeckung nach oben.

Die Erfindung ist selbstverständlich nicht auf das vorstehend beschriebene Ausführungsbeispiel beschränkt. So braucht insbesondere der vordere Rand 16 der Verlängerung 14 nicht die in Fig.2 dargestellte Form aufweisen. Vielmehr kann anstatt einer bogenförmigen Form des Randes 16 z.B. auch eine keilförmige Form benutzt werden. Wichtig ist lediglich, daß die Bewegung der Scheckkarte etc. in Spaltrichtung in eine Bewegung der Verlängerung 14 in Längsrichtung des Verriegelungselementes umgewandelt wird, so daß auch die Rastnut entsprechend verschoben wird.

Je nach Ausgestaltung des Bauteiles 3 können sich die Federelemente 18, 19 anstatt an der ersten Verriegelungszunge 13 auch (mit ihren zum Boden gerichteten Wölbungen) an dem Boden der Vertiefung abstützen und dadurch entsprechend vorgespannt werden. Auch das Verriegelungselement 9 selbst kann entsprechend vorgespannt werden. Außerdem können anstatt der gewölbten Federelemente auch andere Federn (Blattfedern, Schraubenfedern etc.) verwendet werden.

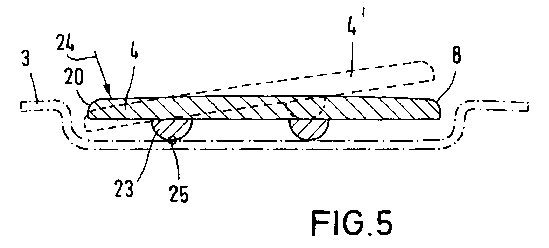

Sofern im Bereich des ersten Seitenrandes 8 keine Federelemente vorgesehen sind oder die dort angeordneten Federelemente eine nur relativ schwache Wirkung beim Lösen der Abdeckung entfalten, hat es sich als vorteilhaft erwiesen, (z.B. halbzylinderförmige) Abrollelemente 23 im Bereich des zweiten Seitenrandes 20 des Abdeckelementes 4 vorzusehen (vgl. Fig.4 und 5). Beim Öffnen der Abdeckung 4 wird dann mit der einen Hand durch Vorbeiziehen einer Scheckkarte etc. an dem Verriegelungselement 9 die Rastnut 12 (Fig.2) verschoben. Gleichzeitig wird mit einem Finger der jeweils anderen Hand durch Druck auf das Abdeckelement 4 -im Bereich zwischen den Abrollelementen 23 und dem Seitenrand 20 (in Fig.5 ist die Richtung der Druckkraft mit dem Bezugszeichen 24 angedeutet)-das Abdeckelement in diesem Bereich nach unten und entsprechend im Bereich des ersten Seitenrandes 8 nach oben verschwenkt. In Fig.5 ist das entsprechend verschwenkte Abdeckelement gestrichelt dargestellt und mit dem Bezugszeichen 4' versehen, während die Kippachse mit dem Bezugszeichen 25 gekennzeichnet ist.

Schließlich müssen das Verriegelungselement 9 und das Verbindungsteil 21 nicht notwendigerweise an einer Grundplatte angeordnet sein, sondern können auch direkt mit dem Abdeckelement verbunden sein.

### Bezugszeichenliste

- 1: Abdeckung
- 2: Vertiefung
- 3: Bauteil
- 4,4': Abdeckelement
- 5: Grundplatte
- 6,7: Nieten
- 8: erste Seitenrand (Abdeckelement)
- 9: Verriegelungselement
- 10: Teilbereich, Blattfederteil
- 11: Boden (Vertiefung)
- 12: Rastnut
- 13: erste Verriegelungszunge
- 14: Verlängerung
- 15: Abdeckspalt
- 16: Rand (Verlängerung)
- 17: Gegenstand, Scheckkarte
- 18,19: Federelemente
- 20: zweite Seitenrand (Abdeckelement)
- 21: hakenförmiges Verbindungsteil
- 22: zweite Verriegelungszunge
- 23: Abrollelement
- 24: Richtung der Druckkraft
- 25: Kippachse

## Patentansprüche

1. Lösbare Abdeckung zum Verschließen der in einem Bauteil (3) angeordneten Vertiefung (2), wobei
a) die Abdeckung (1) aus einem Abdeckelement (4) und mindestens einem unterhalb des Abdeckelementes (4) im Bereich mindestens eines ersten Seitenrandes (8) des Abdeckelementes (4) angeordneten ersten federnden Verriegelungselementes (9) besteht,
b) das erste Verriegelungselement (9) in einem Teilbereich (10) als gebogene Blattfeder mit einer zum Boden (11) der Vertiefung (2) hin gerichteten Wölbung ausgebildet ist,
c) das Verriegelungselement (9) auf der dem ersten Seitenrand (8) des Abdeckelementes (4) abgewandten Seite an diesem befestigt ist,
d) das Verriegelungselement (9) auf seiner dem ersten Seitenrand (8) des Abdeckelementes zugewandten Seite eine Rastnut (12) aufweist, in die beim Verschließen der Vertiefung (2) eine an dem Bauteil (3) randseitig angeordnete erste Verriegelungszunge (13) eingreift,
e) das dem ersten Seitenrand (8) des Abdeckelementes (4) zugewandte Ende des Verriegelungselementes (9) mit einer zungenförmigen Verlängerung (14) versehen ist, die sich über den ersten Rand (8) des Abdeckelementes (4) hinaus erstreckt und den zwischen dem Abdeckelement (4) und dem Bauteil (3) verbleibenden Spalt (15) (Abdeckspalt) mindestens teilweise überdeckt und
f) der dem Bauteil (3) zugewandte Rand (16) der zungenförmigen Verlängerung (14), von oben gesehen, einen Verlauf aufweist, derart, daß bei einem seitlichen Vorbeiführen eines in dem Abdeckspalt (15) verschiebbaren Gegenstandes (17) die zungenförmige Verlängerung (14) von dem Bauteil (3) -und damit auch die Rastnut (12) von der ersten Verriegelungszunge (13)- weggedrückt wird.

2. Lösbare Abdeckung nach Anspruch 1, **dadurch gekennzeichnet**, daß der Rand (16) der zungenförmigen Verlängerung (14), von oben gesehen, einen bogen- oder keilförmigen Verlauf aufweist.

3. Lösbare Abdeckung nach Anspruch 1 oder 2, **dadurch gekennzeichnet**, daß die seitlichen Abmessungen des Abdeckelementes (4) derart gewählt sind, daß zwischen dem Bauteil (3) und dem Abdeckelement (4) ein Abdeckspalt (15) verbleibt, der mindestens der Breite einer Scheckkarte (17), eines Einkaufchips, eines Geldstückes oder dgl. entspricht.

4. Lösbare Abdeckung nach einem der Ansprüche 1 bis 3, **dadurch gekennzeichnet**, daß im Bereich des dem ersten Seitenrand (8) des Abdeckelementes (4) gegenüberliegenden zweiten Seitenrand (20) die Abdeckung (1) mit einem hakenförmigen Verbindungsteil (21) versehen ist, welches beim Verschließen der Vertiefung (2) unter eine zweite Verriegelungszunge (22) des Bauteiles (3) greift.

5. Lösbare Abdeckung nach einem der Ansprüche 1 bis 3, **dadurch gekennzeichnet**, daß im Bereich des dem ersten Seitenrand (8) des Abdeckelementes (4) gegenüberliegenden zweiten Seitenrand (20) ein zweites federndes Verriegelungselement angeordnet ist.

6. Lösbare Abdeckung nach einem der Ansprüche 1 bis 5, **dadurch gekennzeichnet**, daß der als Blattfeder ausgebildete Teilbereich (10) des Verriegelungselementes (9) eine zum Boden (11) der Vertiefung (2) hin gerichtete Wölbung aufweist, die bei auf der Vertiefung (2) befestigter Abdeckung (1) gegen den Boden (11) drückt und die Blattfeder (10) entsprechend vorspannt.

7. Lösbare Abdeckung nach einem der Ansprüche 1 bis 6, **dadurch gekennzeichnet**, daß an dem Abdeckelement (4) parallel zu dem federnden Verriegelungselement (9) mindestens ein weiteres Federelement (18,19) vorgesehen ist, welches eine zum Boden (11) der Vertiefung (2) hin gerichtete Wölbung aufweist, und daß das Federelement (18,19) bei auf der Vertiefung (2) befestigter Abdeckung (1) entweder durch Druck des Federelementes (18,19) gegen die erste Verriegelungszunge (13) oder durch Druck der Wölbung des Federelementes (18,19) gegen den Boden (11) vorspannbar ist.

8. Lösbare Abdeckung nach Anspruch 7, **dadurch gekennzeichnet**, daß an dem Abdeckelement (4) zwei parallel zueinander angeordnete Federelemente (18,19) mit jeweils zum Boden (11) der Vertiefung (2) des Bauteiles (3) hin gerichteter Wölbung befestigt sind, zwischen denen das federnde Verriegelungselement (9) an dem Abdeckelement (4) angeordnet ist.

9. Lösbare Abdeckung nach einem der Ansprüche 1 bis 8, **dadurch gekennzeichnet**, daß im Bereich des zweiten Seitenrandes (20) des Abdeckelementes (4) Abrollelemente (23) angeordnet sind, derart, daß beim Öffnen der Abdeckung (4) durch Druck auf das Abdeckelement 4 -im Bereich zwischen den Abrollelementen (23) und dem Seitenrand (20)-das Abdeckelement (4) in diesem Bereich nach unten und entsprechend im Bereich des ersten Seitenrandes (8) nach oben verschwenkbar ist.

10. Lösbare Abdeckung nach einem der Ansprüche 1 bis 9, **dadurch gekennzeichnet**, daß alle Teile der Abdeckung (1) aus Kunststoff bestehen.

11. Verwendung der Abdeckung (1) gemäß einem der Ansprüche 1 bis 9 zum Verschließen einer im Dachbereich eines Kraftfahrzeuges angeordneten Vertiefung (2), in welche das kraftfahrzeugseitige Ende eines Dachgepäckträgers einsetzbar ist.
